(19) **Europäisches Patentamt**

**European Patent Office**

**Office européen des brevets**

(11) **EP 1 696 431 A1**

(12) **EUROPEAN PATENT APPLICATION**
published in accordance with Art. 158(3) EPC

(43) Date of publication:
**30.08.2006 Bulletin 2006/35**

(51) Int Cl.:
***G11B 7/26*** (2006.01)

(21) Application number: **04820185.9**

(22) Date of filing: **07.12.2004**

(86) International application number:
**PCT/JP2004/018172**

(87) International publication number:
**WO 2005/057568 (23.06.2005 Gazette 2005/25)**

(84) Designated Contracting States:
**AT BE BG CH CY CZ DE DK EE ES FI FR GB GR HU IE IS IT LI LT LU MC NL PL PT RO SE SI SK TR**

(30) Priority: **10.12.2003 JP 2003411140**

(71) Applicant: **TDK Corporation**
**Tokyo 103-8272 (JP)**

(72) Inventors:
• **HAYASHIDA, Naoki**
**c/o TDK Corporation**
**Chuo-ku, Tokyo 1038272 (JP)**
• **ITOH, Hidetake**
**Chuo-ku, Tokyo 1038272 (JP)**
• **YONEYAMA, Kenji**
**Chuo-ku, Tokyo 1038272 (JP)**
• **TANAKA, Kazushi**
**Chuo-ku, Tokyo 1038272 (JP)**

(74) Representative: **Vossius & Partner**
**Siebertstrasse 4**
**81675 München (DE)**

(54) **INFORMATION RECORDING MEDIUM EVALUATION METHOD AND INFORMATION RECORDING MEDIUM EVALUATION DEVICE**

(57) To provide a method of testing an information recording medium (10) based on the effects of fingerprints attached to an incident surface (13a) on the signal characteristics. A step (S12) of attaching an artificial fingerprint to an incident surface (13a) of an information recording medium (10), a step (S13) of reproducing a signal recorded in an attached region to which the artificial fingerprint has been attached, and a step (S14) of judging whether the information recording medium (10) is defective or non-defective based on a signal quality of the reproduced signal are carried out. By doing so, the information recording medium (10) for which the signal quality of the reproduced signal remarkably deteriorates due to fingerprints adhering to the incident surface (13a) can be rejected as substandard, and the distribution of such information recording medium (10) onto the market can be avoided. As a result, it is possible to sufficiently ensure the reliability of the information recording medium (10) that is to be used as bare discs in particular.

*FIG. 2*

DEFECTIVE/NON-DEFECTIVE JUDGING PROCESS ~100

RECORD PREDETERMINED SIGNAL ~S11

ATTACH ARTIFICIAL FINGERPRINT ~S12

REPRODUCE RECORDED SIGNAL ~S13

DOES SIGNAL QUALITY EXCEED THRESHOLD? ~S14
No / Yes

JUDGE AS "NON-DEFECTIVE" ~S16

JUDGE AS "DEFECTIVE" ~S15

END

EP 1 696 431 A1

## Description

TECHNICAL FIELD

The present invention relates to a method of testing an information recording medium and an information recording medium testing apparatus that test whether an information recording medium capable of high density recording is defective or non-defective.

BACKGROUND ART

In recent years, optical recording media as represented by CDs (Compact Discs) and DVDs (Digital Versatile Discs) have been widely used as large capacity recording media for recording digital data. Out of such discs, playback-only types of CDs (i.e., CD-ROMs) on which data cannot be written or rewritten are constructed by laminating a reflective layer and a protective layer on a light-transmitting substrate that is around 1.2mm thick. For CDs of this type, data is reproduced by emitting a laser beam with a wavelength of around 780nm toward the reflective layer from the light transmitting substrate side. On the other hand, CDs of a recordable-type CD (CD-R) on which data can be recorded and a rewritable-type (CD-RW) on which data can be rewritten are constructed with a recording layer formed between the light transmitting substrate and the reflective layer. For these types of CDs, data is recorded and reproduced by emitting a laser beam with a wavelength of around 780nm toward the recording layer from the light transmitting substrate side. Here, when emitting a laser beam toward the CDs of the above types, an objective lens with a numerical aperture of around 0.45 is used to focus the laser beam. By doing so, a laser beam is focused with a beam spot diameter of around 1.6$\mu$m on the reflective layer or recording layer of these CDs, so that a recording capacity of around 700MB and a high-speed data transfer rate (around 1Mbps at the standard linear velocity (around 1.2m/sec)) are achieved.

On the other hand, playback-only types of DVDs (i.e., DVD-ROMs on which data cannot be recorded or rewritten) are constructed by bonding together a multilayer structure, where a reflective layer and a protective layer are laminated on a light transmitting substrate that is around 0.6mm thick, and a dummy substrate that is around 0.6mm thick via a bonding layer. On this type of DVD, the reproduction of data is carried out by emitting a laser beam with a wavelength of around 635nm toward the reflective layer from the light transmitting substrate side. Also, DVDs on which data can be recorded (DVD-R and the like) and DVDs on which data can be rewritten (DVD-RW and the like) are constructed with a recording layer formed between the light transmitting substrate and the reflective layer. For these types of DVDs, the recording and reproduction of data is carried out by emitting a laser beam with a wavelength of around 635nm toward the recording layer from the light transmitting substrate side. When emitting a laser beam onto the above types of DVDs, an objective lens with a numerical aperture of around 0.6 is used to focus the laser beam. By doing so, a laser beam is focused with a beam spot diameter of around 0.93$\mu$m on the reflective layer or recording layer of these DVDs, so that compared to CDs, a smaller beam spot diameter is realized. Also, when recording and reproducing a DVD, a laser beam with a shorter wavelength is used compared to when recording and reproducing a CD, and combined with the reduced diameter of the beam spot, a recording capacity of around 4.7GB per side and a high-speed data transfer rate (around 11Mbps at the standard linear velocity (around 3.5m/sec)) are achieved for a DVD.

Also, in recent years, an optical recording medium that can realize a data recording capacity and a data transfer rate both in excess of DVDs has been proposed (see Patent Literature 1). For this kind of next-generation optical recording medium, to achieve an even higher recording capacity, a laser beam with a wavelength of around 405nm and an objective lens with a numerical aperture of around 0.85 are used. By doing so, it is possible to reduce the beam spot diameter of a laser beam to around 0.43$\mu$m and therefore achieve a recording capacity of around 25GB per side and a high-speed data transfer rate (around 36Mbps at the standard linear velocity (around 5.7m/sec)).

For this next-generation optical recording medium, since an objective lens with an extremely high numerical aperture is used, the occurrence of coma aberration is suppressed and a sufficient tilt margin is realized, so that the thickness of the light transmitting layer that forms the optical path for the laser beam is set so as to be extremely slim at 200$\mu$m or below (as one example, around 100$\mu$m). However, when recording or reproducing data, a laser beam with a short wavelength is emitted from an objective lens with a large numerical aperture, the beam spot on the incident surface of the optical recording medium is reduced as described above, so that dirt adhering to the incident surface, and in particular fingerprints have an increased effect on the signal characteristics of a reproduction signal. For an optical recording medium, such as the next generation optical recording medium described above, whose light transmitting layer that is the optical path for the laser beam is extremely thin, the beam spot diameter on the incident surface is much smaller and the effect of adhering fingerprints on the signal characteristics becomes extremely large. This kind of problem is extremely serious for optical recording media that are normally used as bare discs that are not housed in a cartridge or the like. Accordingly, by applying fake fingerprints (artificial fingerprints) that are artificially formed on an optical recording medium and testing the fingerprint adherence characteristics, the present applicant has developed an optical recording medium on which it is difficult for fingerprints to adhere and from which adhering fingerprints can be easily removed (see Patent Literature 1).

Patent Literature 1: Japanese Laid-Open Patent Publication No. 2003-168248

DISCLOSURE OF THE INVENTION

Problems to be Solved by the Invention

While developing the optical recording medium described above on which it is difficult for fingerprints to adhere, the present applicant also believes that an optical recording medium for which there is no reduction in the reliability of the recording and reproduction of data when fingerprints adhere to the incident surface should be developed. More specifically, even if an optical recording medium on which it is difficult for fingerprints to adhere can be developed, for an optical recording medium used as a bare disc, for example, it is extremely difficult to completely prevent fingerprints and the like from adhering to the optical recording medium. For this reason, in view of the reliability of products in the actual environment in which the products are used, it is believed that optical recording media for which fingerprints adhering to the incident surface have a large effect on the signal characteristics should be rejected as substandard products and not distributed to the market. Accordingly, it is necessary to grasp the effects of the presence of adhering fingerprints on the reproduction characteristics and the recording characteristics for data and to test whether optical recording media (information recording media) are defective or non-defective.

It is an object of the present invention to provide a method of testing an information recording medium and an information recording medium testing apparatus that test an information recording medium based on the effects on signal characteristics of fingerprints attached to an incident surface.

Means for Solving the Problems

A method of testing an information recording medium according to the present invention includes a step of attaching an artificial fingerprint to an incident surface of an information recording medium, a step of reproducing a signal recorded in an attached region to which the artificial fingerprint has been attached, and a step of judging whether the information recording medium is defective or non-defective based on a signal quality of the reproduced signal. It should be noted that an "information recording medium" for the present invention includes not only optical recording media such as CDs and DVDs but also magneto-optical recording media such as MOs.

Also, with the method of testing an information recording medium according to the present invention, the step of judging judges whether the information recording medium is defective or non-defective based on an error rate as the signal quality.

Also, the method of testing an information recording medium according to the present invention carries out, before the step of attaching the artificial fingerprint, a step of recording the signal in at least the attached region.

Also, with the method of testing an information recording medium according to the present invention, after the step of attaching the artificial fingerprint has been carried out, a step of recording the signal in at least the attached region is carried out.

Also, the method of testing an information recording medium according to the present invention carries out, as the step of attaching the artificial fingerprint, at least a first substep of pressing a transfer member onto an artificial fingerprint liquid supplying member, which has been impregnated with artificial fingerprint liquid or to which artificial fingerprint liquid has been attached, to attach the artificial fingerprint liquid to the transfer member and a second substep of pressing the transfer member, onto which the artificial fingerprint liquid has been attached, onto the incident surface of the information recording medium.

Also, with the method of testing an information recording medium according to the present invention, when testing a plurality of information recording media, a pressing pressure of the transfer member on the artificial fingerprint liquid supplying member is kept constant in the step of attaching the artificial fingerprint.

In addition, with the method of testing an information recording medium according to the present invention, when testing a plurality of information recording media, a pressing pressure of the transfer member on the incident surface is kept constant in the step of attaching the artificial fingerprint.

Also, with the method of testing an information recording medium according to the present invention, an amount of the artificial fingerprint liquid impregnated in or attached to the artificial fingerprint liquid supplying member is kept at a predetermined amount.

Also, with the method of testing an information recording medium according to the present invention, the step of reproducing the signal is carried out in an environment that satisfies a condition where $\lambda$/NA is at most 640nm where $\lambda$ is a wavelength of a laser beam used to reproduce the signal and NA is a numerical aperture of an objective lens for focusing the laser beam.

Also, with the method of testing an information recording medium according to the present invention, an information recording medium whose light transmitting layer is no thicker than 200μm is tested.

In addition, with the method of testing an information recording medium according to the present invention, the information recording medium that is tested is constructed for use as a bare disc.

Also, an information recording medium testing apparatus according to the present invention includes: a fingerprint attaching unit configured to attach an artificial fingerprint onto an incident surface of an information recording medium; a signal reproducing unit configured to reproduce a signal recorded in an attached region to which the artificial fingerprint has been attached; and a judging unit configured to judge whether the information recording medium is defective or non-defective based on a signal quality of the reproduced signal.

Effect of the Invention

With the method of testing an information recording medium according to the present invention, by carrying out the step of attaching an artificial fingerprint to the incident surface, the step of reproducing a signal recorded in the attached region, and the step of judging whether the information recording medium is defective or non-defective based on the signal quality of the reproduced signal, it is possible to judge whether the information recording medium is defective or non-defective based on whether the signal quality of the reproduced signal exceeds a standard value when an artificial fingerprint has been attached to the incident surface. Accordingly, information recording media for which the signal quality of the reproduced signal remarkably deteriorates due to fingerprints adhering to the incident surface can be rejected as substandard, and the distribution of such information recording media onto the market can be avoided. By doing so, it is possible to sufficiently ensure the reliability of information recording media that are to be used as bare discs in particular.

Also, with the method of testing an information recording medium according to the present invention, by judging whether the information recording medium is defective or non-defective based on an error rate as the signal quality in the step of judging, it is possible to directly compare the effects of fingerprints attached to the incident surface on the reproduction signal.

In addition, with the method of testing an information recording medium according to the present invention, by carrying out, before the step of attaching the artificial fingerprint, a step of recording the signal in at least the attached region, it is possible to directly test the effect on the reproduction characteristics of fingerprints attached to the incident surface.

Also, with the method of testing an information recording medium according to the present invention, after the step of attaching the artificial fingerprint has been carried out, by carrying out a step of recording the signal in at least the attached region, it is possible to carry out testing with consideration to the effects of fingerprints attached to the incident surface not only on the reproduction characteristics but also on the recording characteristics.

Also, with the method of testing an information recording medium according to the present invention, by carrying out, as the step of attaching the artificial fingerprint, at least a first substep of pressing a transfer member onto an artificial fingerprint liquid supplying member, which has been impregnated with artificial fingerprint liquid or to which artificial fingerprint liquid has been attached, to attach the artificial fingerprint liquid to the transfer member and a second substep of pressing the transfer member, onto which the artificial fingerprint liquid has been attached, onto the incident surface of the information recording medium, it is possible to form (transfer) the artificial fingerprint onto the incident surface using a comparatively simple method.

Also, with the method of testing an information recording medium according to the present invention, a pressing pressure of the transfer member on the artificial fingerprint liquid supplying member is kept constant in the step of attaching the artificial fingerprint. By doing so, it is possible to attach a fixed amount of the artificial fingerprint liquid onto the transfer member, so that the artificial fingerprint liquid can be attached to respective information recording media under the same conditions when testing a plurality of information recording media. Accordingly, since the amount of the artificial fingerprint liquid attached to the incident surface, which is closely related to the signal quality (the error rate or the like), changes in accordance with the fingerprint attachment characteristics of the respective information recording media, it is possible to appropriately judge whether the respective information recording media are defective or non-defective.

In addition, with the method of testing an information recording medium according to the present invention, a pressing pressure of the transfer member on the incident surface is kept constant in the step of attaching the artificial fingerprint. By doing so, when testing a plurality of information recording media, the amount of artificial fingerprint liquid attached to the incident surface, which is closely related to the signal quality (the error rate or the like), changes in accordance with the fingerprint attachment characteristics of the respective information recording media, so that it is possible to appropriately judge whether the respective information recording media are defective or non-defective.

Also, with the method of testing an information recording medium according to the present invention, an amount of the artificial fingerprint liquid impregnated in or attached to the artificial fingerprint liquid supplying member is kept at a predetermined amount. By doing so, since it is possible to apply a constant amount of artificial fingerprint liquid to the transfer member, when testing a plurality of information recording media, it is possible to apply the artificial fingerprint liquid under the same conditions to the respective information recording media. Accordingly, since the amount of artificial fingerprint liquid attached to the incident surface, which is closely related to the signal quality (the error rate or the like), changes in accordance with the fingerprint attachment characteristics of the respective information recording media, it is possible to appropriately judge whether the respective information recording media are defective or non-defective.

In addition, with the method of testing an information recording medium according to the present invention, the step of reproducing the signal is carried out in an environment that satisfies a condition where $\lambda$/NA is at most 640nm. By doing so, out of information recording media that have a premise of being used in such an environment (information recording media where the beam spot of the laser beam on the incident surface is extremely small and the effect of attached fingerprints on the signal characteristics is large), information recording media for which the signal quality of the reproduction signal remarkably deteriorates due to fingerprints adhering to the incident surface can be rejected as substandard, and the distribution of such information recording media onto the market can be avoided.

Also, with the method of testing an information recording medium according to the present invention, an information recording medium whose light transmitting layer is no thicker than 200$\mu$m is tested. By doing so, out of information recording media that have a premise of being used in this kind of environment (information recording media where the beam spot of the laser beam on the incident surface is extremely small and the effect of attached fingerprints on the signal characteristics is large), information recording media for which the signal quality of the reproduction signal remarkably deteriorates due to adhering fingerprints can be rejected as substandard, and the distribution of such information recording media onto the market can be avoided.

In addition, for the method of testing an information recording medium according to the present invention, the information recording medium that is tested is constructed for use as a bare disc. By doing so, out of information recording media that have a premise of being used in an environment where the medium is not enclosed in a cartridge or the like which makes it easy for the medium to become marked with fingerprints, information recording media for which the signal quality of the reproduction signal remarkably deteriorates due to adhering fingerprints can be rejected as substandard, and the distribution of such information recording media onto the market can be avoided.

With the information recording medium testing apparatus according to the present invention, by including a fingerprint attaching unit, a signal reproducing unit, and a judging unit, it is possible to judge whether an information recording medium is defective or non-defective based on whether the signal quality of the reproduced signal exceeds a standard value when an artificial fingerprint has been attached to the incident surface. Accordingly, information recording media for which the signal quality of the reproduction signal remarkably deteriorates due to adhering fingerprints can be rejected as substandard, and the distribution of such information recording media onto the market can be avoided. By doing so, it is possible to sufficiently ensure the reliability of information recording media that are to be used as bare discs in particular.

BRIEF DESCRIPTION OF THE DRAWINGS

[FIG. 1] A block diagram showing the construction of an optical recording medium testing apparatus 1.

[FIG. 2] A flowchart for a defective/non-defective judging process 100 as one example of a method of testing an information recording medium according to the present invention.

[FIG. 3] A partially cutaway perspective view showing the construction of an optical recording medium 10 as one example of a tested object.

[FIG. 4] A cross-sectional view in which a part A in FIG. 3 is enlarged.

[FIG. 5] A cross-sectional partial view showing the multilayer structure of an optical recording medium 20 that is another example of a tested object.

[FIG. 6] A cross-sectional partial view showing the multilayer structure of an optical recording medium 30 that is yet another example of a tested object.

[FIG. 7] A cross-sectional partial view showing the multilayer structure of an optical recording medium 40 that is yet another example of a tested object.

[FIG. 8] A diagram showing a state where a transfer member 62 is pressed onto an artificial fingerprint liquid supplying member 61 on which artificial fingerprint liquid has been attached.

[FIG. 9] A diagram showing a state where the transfer member 62 on which the artificial fingerprint liquid has been attached is pressed onto the incident surface 13a of the respective optical recording media 10 (20, 30, 40) that are tested objects.

[FIG. 10] A flowchart of a defective/non-defective judging process 200 that is another example of a method of testing an information recording medium according to the present invention.

[FIG. 11] A flowchart of a defective/non-defective judging process 300 that is yet another example of a method of testing an information recording medium according to the present invention.

[FIG. 12] A flowchart of a defective/non-defective judging process 400 that is yet another example of a method of testing an information recording medium according to the present invention.

DESCRIPTION OF THE PREFERRED EMBODIMENTS

Preferred embodiments of a method of testing an information recording medium and an information recording medium testing apparatus according to the present invention will now be described with reference to the attached drawings.

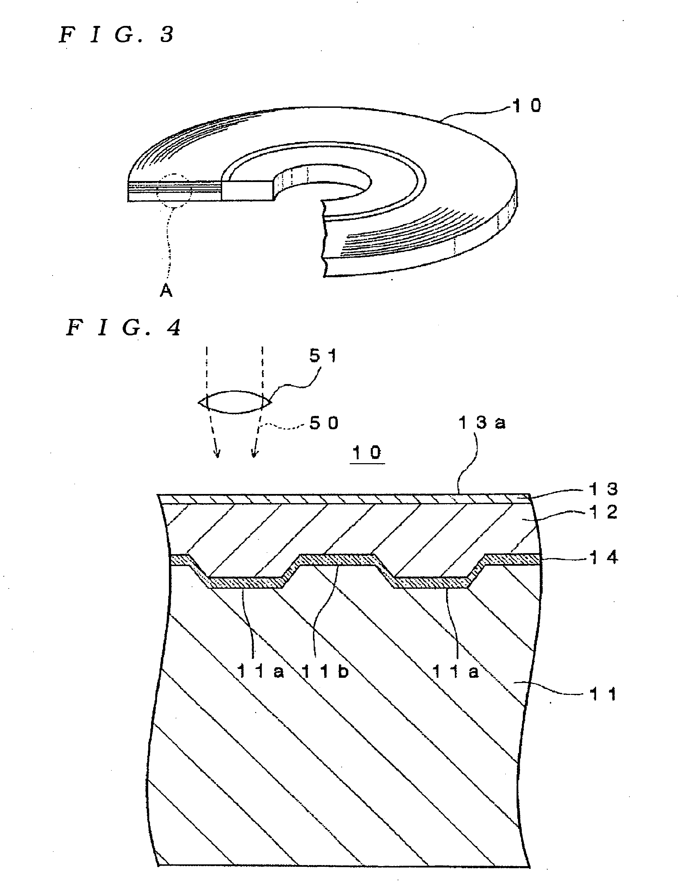

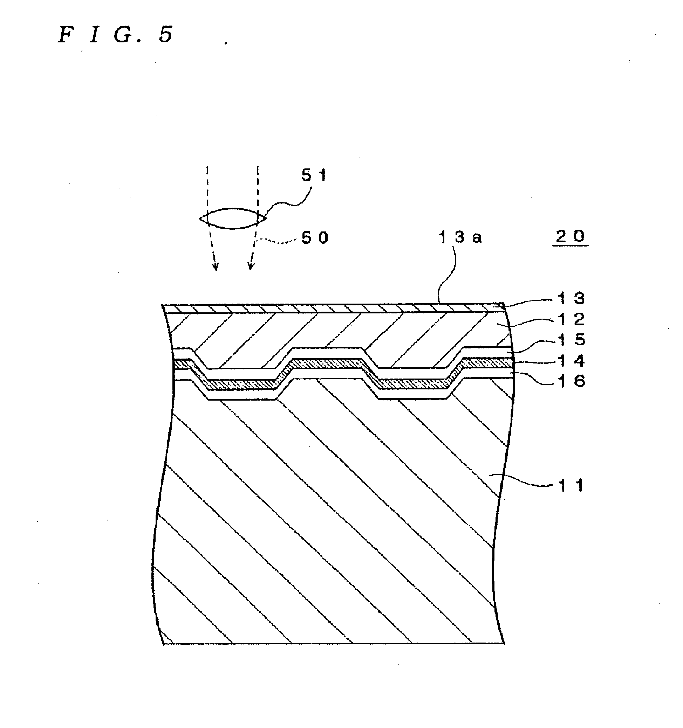

First, the construction of an optical recording medium testing apparatus 1 that judges (tests) whether an optical recording medium 10 or the like (see FIGS. 3 and 4) is defective or non-defective according to a method of testing an information recording medium of the present invention will be described with reference to the attached drawings.

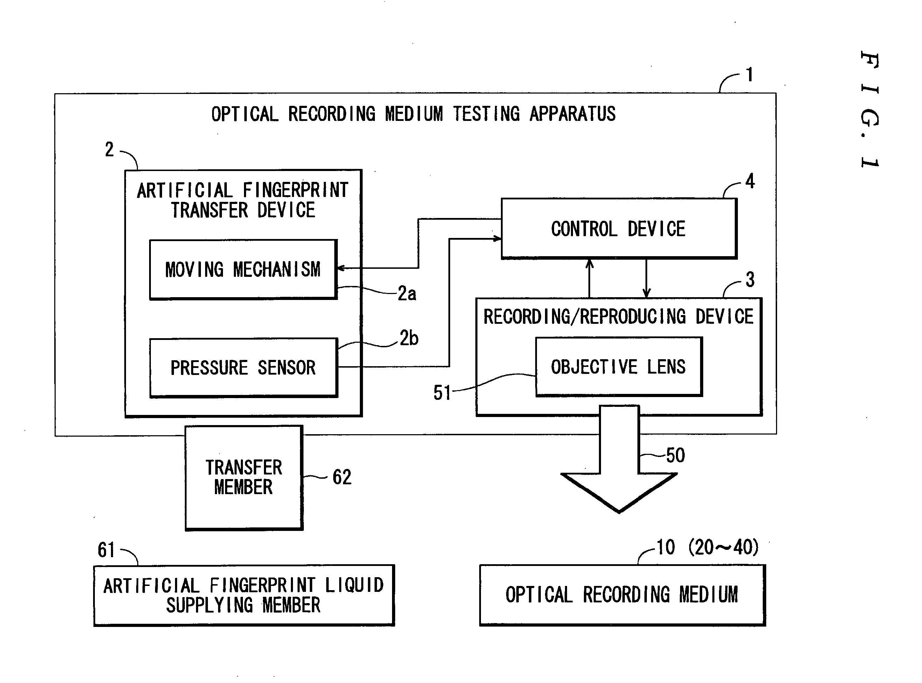

The optical recording medium testing apparatus 1 shown in FIG. 1 is one example of an information recording medium testing apparatus according to the present invention, and as described later, carries out a defective/non-defective judging process 100 or the like to judge (test) whether an optical recording medium 10 or the like is defective or non-defective. The optical recording medium testing apparatus 1 includes an artificial fingerprint transfer device 2, a recording/reproducing device 3, and a control device 4. The artificial fingerprint transfer device 2 (hereinafter simply "transfer device 2") corresponds to a "fingerprint attaching unit" for the present invention and includes a moving mechanism 2a for moving a transfer member 62 and a pressure sensor 2b for detecting a pressing force that the moving mechanism 2a has the transfer member 62 exert on an artificial fingerprint liquid supplying member 61 or the optical recording medium 10 or the like. The recording/reproducing device 3 corresponds to a "signal reproducing unit" for the present invention and carries out the recording of data onto the optical recording medium 10 or the like and the reading of data (the reproduction of data) from the optical recording medium 10 or the like under the control of the control device 4. The control device 4 corresponds to a "judging unit" for the present invention and judges whether the optical recording medium 10 or the like is defective or non-defective based on signal quality of an output signal (the reproduction signal read from the optical recording medium 10 or the like) from the recording/reproducing device 3.

The artificial fingerprint liquid supplying member 61 (an artificial fingerprint liquid supplying plate) is formed of polycarbonate in a plate-like form, for example. Artificial fingerprint liquid for adhesion to the transfer member 62 during the defective/non-defective judging process 100 and the like described later is attached (applied) to the artificial fingerprint liquid supplying member 61. Here, there are no particular limitations on the artificial fingerprint liquid (a material for artificial fingerprints), but a composition that includes a particulate material and a dispersion medium that can disperse the particulate material is preferable. Also, since a majority of the solid matter included in actual fingerprints is keratin, the particulate material should preferably use a fine protein powder called keratin. Accordingly, one example of the simplest composition for the artificial fingerprint liquid is an artificial fingerprint liquid prepared by adding and mixing a dispersant (described later) to fine keratin powder. More specifically, it is possible to effectively use a mixture of a dispersant, such as water, oleic acid, squalene, and triolein, and fine keratin powder in appropriate proportions as the artificial fingerprint liquid.

However, since the keratin that is normally available is extremely expensive, the cost of testing information recording media also rises steeply. Also, the particle size distribution of commercial keratin differs to the particle size distribution of the keratin included in actual fingerprints, so that the particle size distribution usually needs to be made equal in advance. Accordingly, from the viewpoints of cost as well as measurement accuracy and reproducibility, it is not necessarily preferable to use commercial keratin as the particulate material. For this reason, in place of the keratin, it is preferable to use a particulate material including at least one type of particles selected from inorganic particles and organic particles. Here, silica particles, alumina particles, iron oxide particles and a mixture of any two or more types selected from these particles can be given as examples of inorganic particles. Also, chitin particles, chitosan particles, acrylic particles, styrene particles, divinyl benzene particles, polyamide particles, polyimide particles, polyurethane particles, melamine particles, and a mixture of any two or more types selected from these particles can be given as examples of organic particles.

Any of the types of inorganic particles listed above have the same effect as keratin particles when used as a component of an artificial fingerprint liquid and are also considerably cheaper than commercial keratin particles. Accordingly, to reduce the cost of testing and simultaneously improve the measurement accuracy and reproducibility, out of all of the particulate material mixed in the artificial fingerprint liquid, the included amount of inorganic particles should preferably be 50% or above by weight, with an amount of 80% or above by weight being more preferable. Here, it is extremely preferable for all of the particulate material (that is, 100% by weight of the particulate material) mixed in the artificial fingerprint liquid to be composed of the inorganic particles listed above. It is also possible to use organic particles with the inorganic particles as necessary. Here, out of the organic particles, acrylic particles, styrene particles, divinyl benzene particles, polyamide particles, polyimide particles, polyurethane particles, melamine particles and the like are preferable due to their low cost. It is also possible to use keratin particles together with the particles described above.

The particulate material described above should preferably have an average particle diameter (that is, a median diameter) of 100$\mu$m or below, with an average particle diameter of 50$\mu$m or below being more preferable. Here, JIS Z8901 Test Powder Class 1, JIS Z8901 Test Powder Class 2, ISO Test Dust 12103-1, and APPIE (Association of Powder Process Industry and Engineering, Japan) Standard Dust can be given as examples of particulate materials with an inorganic component and an average particle diameter of 100$\mu$m or below. These test materials all have uniform particle diameters and can be obtained relatively cheaply, which means that such materials can be favorably used as the particulate materials composing an artificial fingerprint liquid. Out of JIS Z8901 Test Powder Class 1, Kanto loam is one example of a more preferable powder. On the other hand, regarding the average particle diameter of the particulate material, if the particulate material is too large or too small, it will not be possible to achieve a sufficient function as a substitute for the keratin included in actual fingerprints, and therefore an average particle diameter of 0.05$\mu$m or above is preferable, with an average particle diameter of 0.5$\mu$m or above being even more preferable. Accordingly, a particulate material with an average particle diameter in a range of 0.05$\mu$m to 100$\mu$m inclusive should preferably be used, with a particulate material with an average particle diameter in a range of 0.5$\mu$m to 50$\mu$m inclusive being even more preferable.

It is also preferable for the particulate material to have a critical surface tension at 25°C that exceeds the surface tension at 25°C of the dispersant, with which the particulate material is mixed. More specifically, as one example, the critical surface tension should preferably be 40mNm$^{-1}$ or above, with 50mNm$^{-1}$ or above being even more preferable. Here, the various particles listed above as examples of the inorganic particles all satisfy the above preferable condition for the critical surface tension.

On the other hand, a liquid that composes sweat or sebum, or a liquid with similar properties should preferably be used as the dispersant. More specifically, a liquid with a surface tension at 25°C in a range of 20 to 50mNm$^{-1}$ and a saturated vapor pressure at 200°C of 760mmHg (101,325 Pa) or less should preferably be used. It should be noted that when the surface tension at 25°C is below 20mNm$^{-1}$, the wettability for the incident surface becomes too high compared to actual fingerprints. Conversely, when the surface tension at 25°C is above 50mNm$^{-1}$, the wettability for the incident surface becomes too low compared to actual fingerprints. In addition, when the saturated vapor pressure at 200°C is above 760mmHg (101,325 Pa), after application onto the incident surface, the dispersant gradually volatilizes and the state of the attached artificial fingerprints changes in a short time. Accordingly, the surface tension and the saturated vapor pressure should preferably be set within the ranges given above. Also, the dispersant should preferably have a viscosity at 25°C of 500cP or below, more preferably in a range of 0.5 to 300cP, and even more preferably in a range of 5 to 250cP. By using a dispersant that satisfies this viscosity, it is possible for the particulate material to be favorably dispersed even after an artificial fingerprint has been attached to the incident surface and to easily adhere to the incident surface.

There are no particular limitations on the specific material for the dispersant, and higher fatty acids, derivatives of higher fatty acids, terpenes, terpene derivatives, and the like can be given as examples. Here, oleic acid, linoleic acid, linolenic acid, and the like can be given as examples of higher fatty acids. Also, ester derivatives can be given as examples of derivatives of higher fatty acids, with diglyceride derivatives and triglyceride derivatives (such as triolein) being examples of such. A variety of terpenes can be used, with specific examples of such being squalene, limonene, $\alpha$-pinene, $\beta$-pinene, camphene, linalool, terpineol, and cadinene. It is possible to select one of the materials listed above, or to use a mixture of two or more materials selected from this list. The selected material or materials can also be mixed with water.

On the other hand, an elastomer should preferably be used as the material forming the transfer member 62 for attaching the artificial fingerprints. More specifically, silicone rubber, butadiene rubber, urethane rubber, and the like should preferably be used. It should be noted that the hardness of the elastomer used should preferably be in a range of 40 to 70 inclusive as measured by a durometer (type A), with a hardness in a range of 50 to 60 inclusive being even more preferable. Also, the transfer member 62 can be formed in a shape that resembles a proper fingerprint pattern by producing a mold from an actual person's finger, but to simplify the application of artificial fingerprints, it is also possible to use a rubber plug for printing with artificial fingerprint liquid that is standardized according to JIS K2246-1994 as the transfer member 62. That is, it is possible to use, as the transfer member 62, a No. 10 rubber plug whose small circular surface (with a diameter of around 26mm) has been ground and roughened using an AA240 abradant standardized according to JIS R6251 or JIS R6252 or an abradant with the same type of abrasive compound. It should be noted that the grinding process using an abradant is normally carried out manually, but to avoid fluctuations in flatness and roughness during the grinding process (that is, fluctuations in the adhesion of the artificial fingerprint liquid to the transfer member 62), it is possible to use a construction where a mold surface used for molding the transfer member 62 is roughened in advance and an artificial fingerprint is transferred onto the surface of the transfer member. It should be noted that so long as it is possible to achieve effectively the same transfer characteristics as the example described above, the transfer member 62 is not limited to the materials of the described example. To attach an artificial fingerprint of similar dimensions to an actual fingerprint, it is preferable to use a rubber plug with a smaller diameter (more specifically, a diameter of around 8 to 25mm) than the rubber plug described above, with a rubber plug with a diameter of around 8 to 20mm being even more preferable.

Next, optical recording media 10, 20, 30, and 40, which are examples of tested objects, will be described with reference to the drawings.

The optical recording medium 10 shown in FIGS. 3 and 4 is one example of an information recording medium for the present invention, and is formed in a disc-like form with an external diameter of 120mm and a thickness of around 1.2mm. As shown in FIG. 4, the optical recording medium 10 includes a support substrate 11, a light transmitting layer 12, a hard coat layer 13, and a recording layer 14. Also, the optical recording medium 10 is constructed so that data can be recorded on the recording layer 14 and read (reproduced) from the recording layer 14 by irradiation with a laser beam 50 with a wavelength $\lambda$ in a range of 380nm to 450nm, inclusive (as one example, 405nm) from an incident surface side 13a (the surface of the hard coat layer 13). In this case, when data is recorded onto or reproduced from the optical recording medium 10, an objective lens 51 with a numerical aperture of 0.65 or above, and preferably around 0.85 is used, and when the wavelength of the laser beam 50 is set at $\lambda$ and the numerical aperture of the objective lens 51 is set at NA, it is preferable to set $\lambda/NA \leqq 640nm$.

The support substrate 11 functions as a support member for forming the recording layer 14 and the like, also functions as a thickness adjusting member for achieving the thickness (around 1.2mm) required for the optical recording medium 10, and is formed in a disc-like form with a thickness of around 1.1mm. Also, grooves 11a and lands 11b for guiding the laser beam 50 are formed in a spiral or concentric circles from a central periphery to an outer edge on one surface of the support substrate 11. Here, it is possible to use various materials as the materials of the support substrate 11, and as one example, it is possible to use glass, ceramic, resin, or the like. Out of these various materials, it is preferable to use resin due to the ease of molding. More specifically, polycarbonate resin, olefin resin, acrylic resin, epoxy resin, polystyrene resin, polyethylene resin, polypropylene resin, silicone resin, fluororesin, an ABS resin, or a urethane resin can be given as examples. Out of these, it is especially preferable to use polycarbonate resin and olefin resin due to the ease of machining such materials. For the optical recording medium 10, the support substrate 11 is not part of the optical path for the laser beam 50, so that it is not necessary for the support substrate 11 to have high transmissivity for light. The support substrate 11 should preferably be fabricated by injection molding using a stamper, but may also be fabricated by various kinds of methods such as photopolymerization (the "2P" method).

The light transmitting layer 12 is a layer that protects the recording layer 14 against scratches and also forms an optical path of the laser beam 50, and is formed so that the thickness of the light transmitting layer 12 is in a range of 10μm to 200μm, inclusive (as one example, around 100μm). In this case, so long as the material has a sufficiently high transmissivity for light of the wavelength range of the laser beam 50 used for recording and reproduction, there are no particular limitations on the material forming the light transmitting layer 12, but it is preferable to form the light transmitting layer 12 by spin coating or the like using an acrylic or epoxy UV curing resin. Also, instead of forming the light transmitting layer 12 by hardening a UV curing resin, it is possible to form the light transmitting layer 12 by attaching a light transmitting sheet formed of a light transmitting resin using various kinds of adhesive.

The hard coat layer 13 is a thin film formed on the incident surface side 13a of the optical recording medium 10 on which the laser beam 50 is incident, and protects the light transmitting layer 12 against scratches and prevents marks such as fingerprints from adhering (i.e., makes it difficult for fingerprints to adhere). As examples, as the material for forming the hard coat layer 13, it is possible to use a UV-curing resin including epoxy acrylate oligomer (a two-functional oligomer), a multi-functional acryl monomer, a single functional acryl monomer, and a photopolymerization initiator, a compound such as an oxide, nitride, sulfide, or carbide of aluminum (Al), silicon (Si), cerium (Ce), titanium (ti), zinc (Zn) or tantalum (Ta), or a mixture of such compounds. When a UV-curing resin is used as the material for forming the hard coat layer 13, the hard coat layer 13 should preferably be formed by spin coating on the light transmitting layer 12. When one or a mixture of the oxide, nitride, sulfide, or carbides listed above is used, the hard coat layer 13 should preferably be formed on the light transmitting layer 12 by a vapor-phase growth method (for example, sputtering or a vacuum evaporation method) that uses chemicals including the composite elements. In this case, it is preferable to use sputtering as the vapor-phase growth method.

Also, by providing the hard coat layer 13 with a lubricating action, a dirt-resisting function can be considerably increased. To provide the hard coat layer 13 with a lubricating action, it is effective to include a lubricant in a base material of the hard coat layer 13. Here, any of a silicone lubricant, a fluoride lubricant, and a fatty ester lubricant should preferably be selected as this lubricant. Also, the amount of lubricant included in the base material should preferably be in a range of 0.1% to 5.0%, inclusive by weight.

The recording layer 14 is a layer that records data through the formation of recording marks by irradiation with the laser beam 50, and is formed so as to be sandwiched between the support substrate 11 and the light transmitting layer 12. In this case, there are no particular limitations on the material forming the recording layer 14 or a multilayer structure of the recording layer 14, but when the optical recording medium 10 is manufactured as a rewritable information recording medium, reversible recording marks are formed by forming the recording layer 14 using a phase-change material. Also, when the optical recording medium 10 is manufactured as a recordable information recording medium, the recording layer 14 is formed using a material produced by adding magnesium (Mg) and/or aluminum (A1) to a dielectric base material with either a mixture of ZnS and $SiO_2$ or LaSiON (a mixture of $La_2O_3$, $SiO_2$, and $Si_3N_4$) as a principal component, so that irreversible recording marks can be formed. In addition, when the optical recording medium 10 is manufactured as a recordable information recording medium, aside from the above selections of materials, it is possible to use a construction where irreversible recording marks can be formed by forming the recording layer 14 using a multilayer structure in which two different materials (as one example, silicon (Si) and copper (Cu)) are laminated.

For the optical recording medium 10 of the above construction, when the wavelength of the laser beam 50 is set at $\lambda$ and the numerical aperture of the objective lens 51 is set at NA as described above, the condition that $\lambda/NA \leqq 640nm$ is satisfied and the thickness of the light transmitting layer 12 is set extremely thinly at $200\mu m$ or below) (as one example, at around $100\mu m$), so that the diameter of the beam spot of the laser beam 50 on the incident surface 13a becomes extremely small (as one example, at around $120\mu m$). Accordingly, compared to a conventional information recording medium (an information recording medium with a large beam spot diameter on the incident surface) such as the various types of CD, the effect on the signal characteristics of fingerprints attached to the incident surface 13a tends to be relatively large, and in particular, since it is easy for fingerprints and the like to become attached during use when information recording media are used as bare discs, the effect on the signal characteristics of adhering fingerprints cannot be ignored. Accordingly, for the optical recording medium 10, it is necessary to sufficiently evaluate the effect on the signal characteristics of adhering fingerprints using the method of testing an information recording medium according to the present invention.

On the other hand, the optical recording medium 20 shown in FIG. 5 is another example of an "information recording medium" for the present invention, and has a multilayer structure where the recording layer 14 of the optical recording medium 10 described above is protected by being sandwiched between a first dielectric layer 15 and a second dielectric layer 16. Component parts that are the same as the respective layers of the optical recording medium 10 have been assigned the same reference numerals and duplicated description thereof has been omitted. The first dielectric layer 15 and the second dielectric layer 16 are layers that physically and chemically protect the recording layer 14 formed in between these layers, and since the recording layer 14 is protected by the dielectric layers 15 and 16, after data is recorded on the recording layer 14, the loss of data (deterioration in the recorded information) over long periods is avoided.

In this case, so long as a dielectric material has a sufficiently high transmissivity for light of the wavelength range of the laser beam 50 in use, there are no particular limitations on the material composing the dielectric layers 15, 16, and as one example, it is possible to use a dielectric material with an oxide, sulfide, nitride, or any combination of the same as a principal component. More specifically, to prevent thermal deformation of the support substrate 11 and the like and achieve favorable protection for the recording layer 14, it is preferable to use $Al_2O_3$, AlN, ZnO, ZnS, GeN, GeCrN, $CeO_2$, SiO, $SiO_2$, $Si_3N_4$, SiC, $La_2O_3$, TaO, $TiO_2$, SiAlON (a mixture of $SiO_2$, $Al_2O_3$, $Si_3N_4$ and AlN), LaSiON (a mixture of $La_2O_3$, $SiO_2$, and $Si_3N_4$) and the like, an oxide, nitride, sulfide, or carbide of aluminum (Al), silicon (Si), cerium (Ce), titanium (Ti), zinc (Zn), tantalum (Ta) and the like or a mixture of the same, with a mixture of ZnS and $SiO_2$ being especially preferable. Here, it is especially preferable to set the molar ratio of the ZnS and $SiO_2$ at 80:20. The dielectric layers 15, 16 may be formed of the same material or may be formed of different materials. It is also possible for one or both of the dielectric layers 15, 16 to have multilayer structures composed of a plurality of dielectric films.

For the optical recording medium 20 of the above construction, when the wavelength of the laser beam 50 is set at $\lambda$ and the numerical aperture of the objective lens 51 is set at NA as described above, the condition that $\lambda/NA \leqq 640nm$ is satisfied and the thickness of the light transmitting layer 12 is set extremely thinly at $200\mu m$ or below (as one example, at around $100\mu m$), so that like the optical recording medium 10 described above, the diameter of the beam spot of the laser beam 50 on the incident surface 13a becomes extremely small (as one example, at around $120\mu m$). Accordingly, for the optical recording medium 20 like the optical recording medium 10, it is necessary to sufficiently evaluate the effect on the signal characteristics of adhering fingerprints using the method of testing an information recording medium according to the present invention.

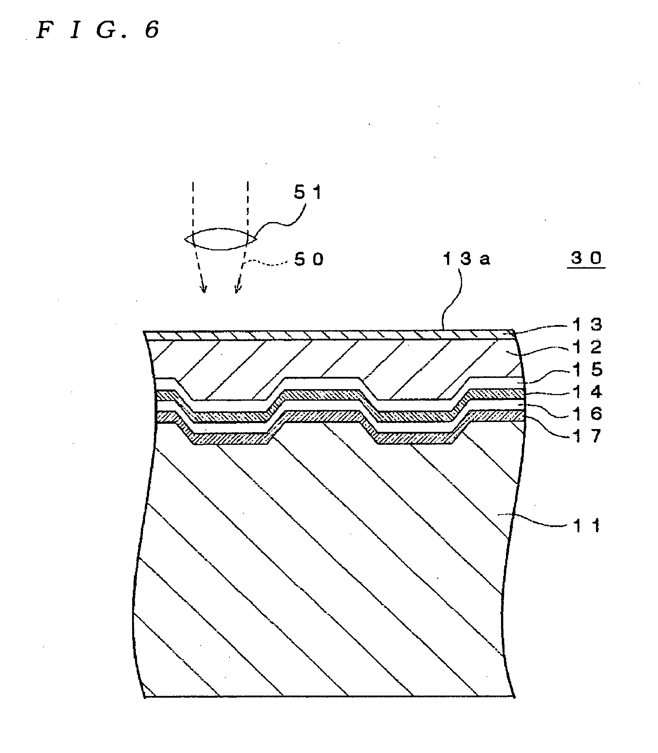

Also, the optical recording medium 30 shown in FIG. 6 is yet another example of an information recording medium for the present invention, and has a multilayer structure where a reflective layer 17 is added between the support substrate 11 and the second dielectric layer 16 of the optical recording medium 20 described above. Note that here also, component parts that are the same as the respective layers of the optical recording medium 20 have been assigned the same reference numerals and duplicated description thereof has been omitted. The reflective layer 17 is a layer that reflects the laser beam 50 incident from the incident surface 13a side and emits light from the incident surface 13a, and functions so as to increase the reproduction signal (C/N ratio) according to a multiple interaction effect. So long as the laser beam 50 can be reflected, there are no particular limitations on the material for forming the reflective layer 17, but as examples, magnesium (Mg), aluminum (Al), titanium (Ti), chromium (Cr), iron (Fe), cobalt (Co), nickel (Ni), copper (Cu), zinc (Zn), germanium (Ge), silver (Ag), platinum (Pt), and gold (Au) can be used. Out of these materials, due to their high reflectivity, it is preferable to use a metal material such as aluminum (Al), gold (Au), silver (Ag), copper (Cu) or an alloy of such metals (such as an alloy of aluminum and titanium), with silver (Ag) or an alloy with silver as a principal component being even more preferable.

For the optical recording medium 30 of the above construction, when the wavelength of the laser beam 50 is set at $\lambda$ and the numerical aperture of the objective lens 51 is set at NA as described above, the condition that $\lambda/NA \leqq 640nm$ is satisfied and the thickness of the light transmitting layer 12 is set extremely thinly at $200\mu m$ or below (as one example, at around $100\mu m$), so that like the optical recording medium 20 described above, the diameter of the beam spot of the laser beam 50 on the incident surface 13a becomes extremely small (as one example, at around $120\mu m$). Accordingly, for the optical recording medium 30, like the optical recording medium 20, it is necessary to sufficiently evaluate the effect on the signal characteristics of adhering fingerprints using the method of testing an information recording medium according to the present invention.

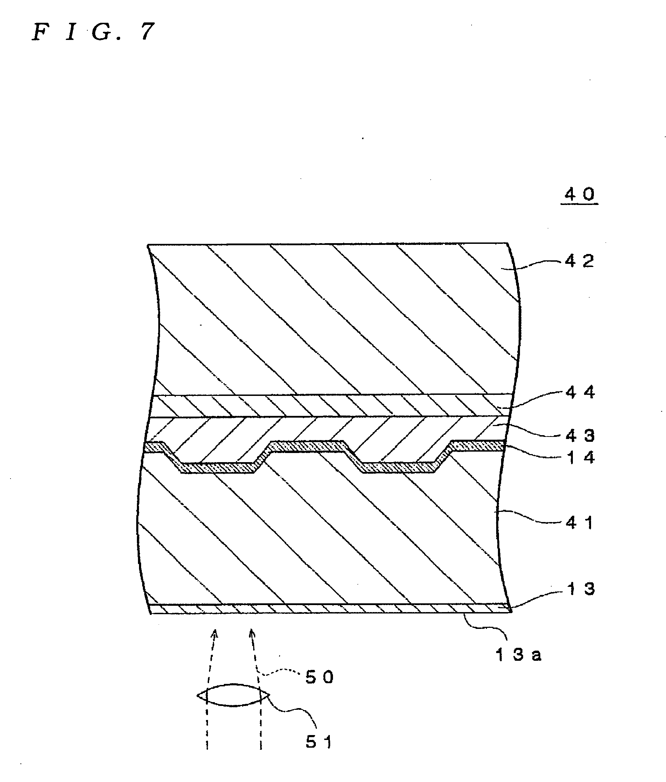

Also, the optical recording medium 40 shown in FIG. 7 is yet another example of an information recording medium for the present invention and has the same construction as a normal existing DVD. More specifically, the optical recording medium 40 includes a light transmitting substrate 41, a dummy substrate 42, a protective layer 43, a bonding layer 44, a hard coat layer 13, and a recording layer 14. Data is recorded onto and reproduced from the optical recording medium 40 by irradiation with the laser beam 50 with a wavelength $\lambda$ of around 405nm from the incident surface 13a side (the surface of the hard coat layer 13), with an objective lens 51 with a numerical aperture of around 0.65 being used to focus the laser beam 50. Accordingly, when the wavelength of the laser beam 50 is set at $\lambda$ and the numerical aperture of the objective lens 51 is set at NA, the condition $\lambda/NA \leqq 640nm$ is satisfied. In this case, it is possible to use a multilayer construction where the recording layer 14 is protected by being sandwiched between two dielectric layers or a multilayer construction where a reflective layer is formed between the recording layer 14 and the protective layer 43.

For the optical recording medium 40 constructed as described above, the thickness of the light transmitting substrate 41 that forms the optical path for the laser beam 50 is set at around 0.6mm, and compared to the thickness of the light transmitting layer 12 in the optical recording media 10, 20, 30 described above, the light transmitting substrate 41 is made much thicker. In this case, when the wavelength of the laser beam 50 in use is set at $\lambda$ and the numerical aperture of the objective lens 51 is set at NA, the optical recording medium 40 is also constructed so that the condition that $\lambda/NA \leqq 640nm$ is satisfied. Accordingly, since the beam spot of the laser beam 50 focused on the recording layer 14 can be made extremely small compared to a conventional information recording medium such as a CD or an existing DVD, compared to a conventional information recording medium, there is a tendency for fingerprints adhering to the incident surface 13a to have a relatively large effect on signal characteristics. Accordingly, for the optical recording medium 40, like the optical recording media 10, 20, and 30 described above, it is necessary to sufficiently evaluate the effect on the signal characteristics of adhering fingerprints using the method of testing an information recording medium according to the present invention.

Next, a method of testing the optical recording medium 10 or the like using the optical recording medium testing apparatus 1 will be described with reference to the drawings.

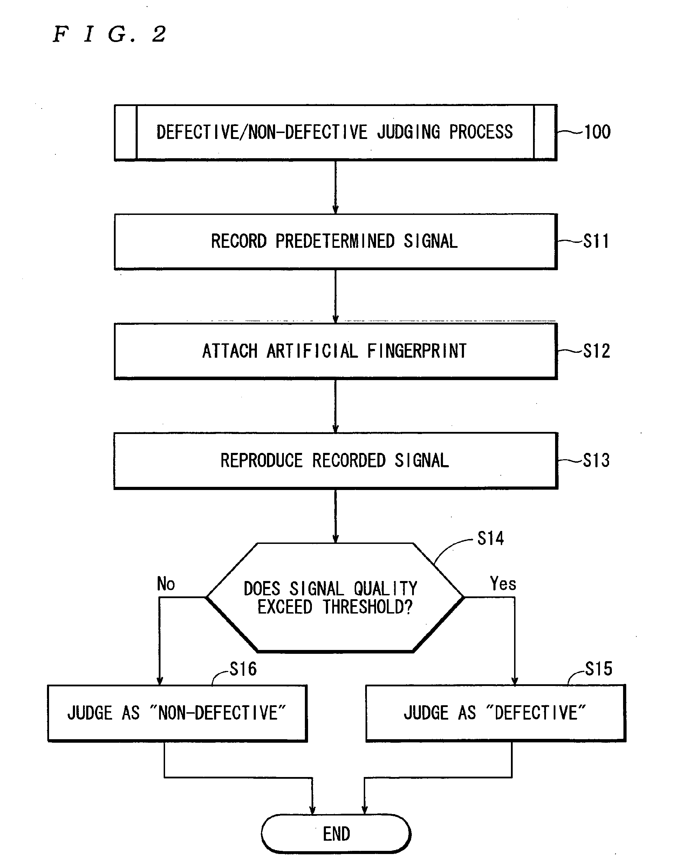

When testing a recordable or rewritable information recording medium, first, the information recording medium to be tested (for example, the optical recording medium 10) is set in the optical recording medium testing apparatus 1 and a start of the testing process (defective/non-defective judging process) is indicated. In response, the control device 4 of the optical recording medium testing apparatus 1 starts the defective/non-defective judging process 100 shown in FIG. 2. In the defective/non-defective judging process 100, the control device 4 first controls the recording/reproducing device 3 to have a predetermined signal recorded on the recording layer 14 of the optical recording medium 10 ("a step of recording a signal" for the present invention: step S11). In this case, as the recording conditions for the recording of the predetermined signal, in view of the environment in which the optical recording medium 10 will be actually used, the recording/reproducing device 3 should preferably be set with the same conditions as the various conditions (recording linear velocity, pulse train pattern and recording power of a laser beam, and the like) used when recording actual data. It should be noted that there are no particular limitations on the signal recorded on the optical recording medium 10 in the defective/non-defective judging process 100, and a random signal or a uniform signal (repetitions of the same signal) may be used.

Next, the control device 4 controls the transfer device 2 to attach an artificial fingerprint onto the incident surface 13a in a region in which the predetermined signal has been recorded in step S11 (a "step of attaching an artificial fingerprint" for the present invention: step S12). An "artificial fingerprint" is a fake fingerprint that has been formed artificially, and by attaching such an artificial fingerprint in place of having an actual human fingerprint attached to the incident surface, whenever the testing process is carried out, the attachment conditions can be kept constant (it is possible to improve the reproducibility of the attachment conditions) and compared to the case where an actual human fingerprint is attached, the attaching process can be made much more efficient. It should be noted that the method of attaching the artificial fingerprint onto the incident surface 13a will be described in detail later. Next, after the attachment of the artificial fingerprint has been completed, the control device 4 controls the recording/reproducing device 3 to reproduce the signal recorded in step S11 (a "step of reproducing a signal" for the present invention: step S13). Here, the region from which a signal is reproduced must include the region in which the artificial fingerprint was attached in step S12. Also, conditions that are the same as the conditions when a user actually reproduces data should preferably be set as the reproduction conditions.

Next, the control device 4 measures the signal quality of the signal reproduced in step S13 (the signal outputted from the recording/reproducing device 3) (a step of judging defective or non-defective" for the present invention: step S14), and when a predetermined threshold is exceeded, the optical recording medium 10 is judged to be "defective" (step S15), while when a predetermined threshold is not exceeded, the optical recording medium 10 is judged to be "non-defective" (step S16). By doing so, the defective/non-defective judging process 100 is completed. It should be noted that as the signal quality used as the judgment standard in step 14 described above, any of the following is measured: error rate; jitter; output level; C/N ratio; reflectivity; degree of modulation; RF signal flatness; p-p (peak-to-peak) value of a focus sensitivity curve; quantity of a residual error part of a focus error signal; and a ratio of the quantity of a residual error part to the p-p value. As the signal quality used as the judgment standard, it is also possible to use one or two or more of the signal characteristics described above. Out of these, since it is possible to directly judge the effect of artificial fingerprints attached to the incident surface 13a, it is especially preferable to judge whether a medium is defective or non-defective with the error rate as the judgment standard. It should be noted that although the defective/non-defective judging process 100 is carried out to test the optical recording medium 10 in the above example, it is also possible to carry out the same process to test the optical recording media 20, 30, 40 or various other types of information recording media.

Next, the method of attaching artificial fingerprints to the incident surface 13a in step 12 in the defective/non-defective judging process 100 will be described with reference to the drawings.

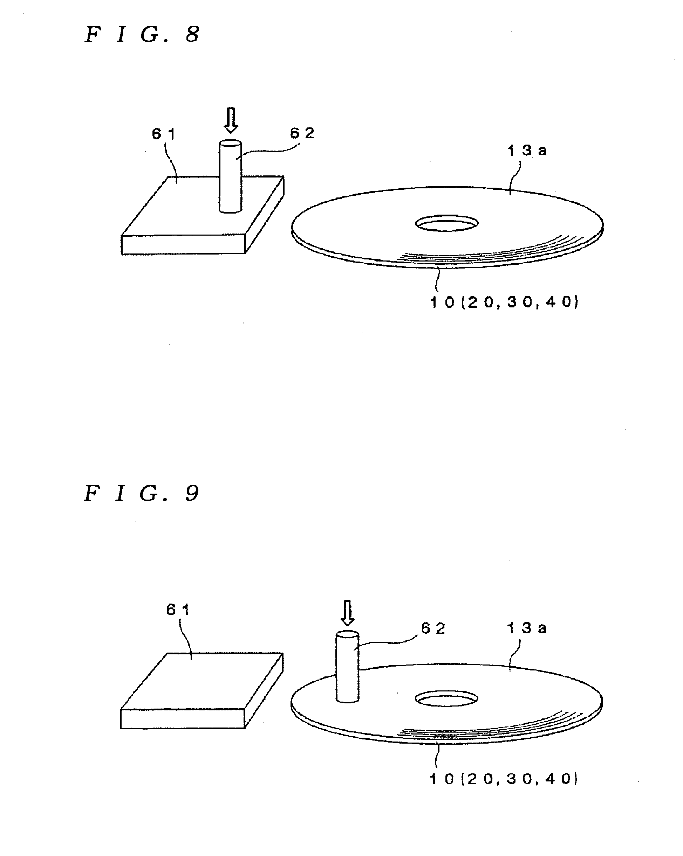

In step 12 of the defective/non-defective judging process 100 described above, the transfer device 2 attaches artificial fingerprints to the incident surface 13a under the control of the control device 4. More specifically, as shown in FIG. 8, the moving mechanism 2a of the transfer device 2 first moves the transfer member 62 and presses the transfer member 62 onto the artificial fingerprint liquid supplying member 61, on which artificial fingerprint liquid has been attached (applied), to apply the artificial fingerprint liquid to the transfer member 62. At this time, the control device 4 calculates the pressing pressure (pressing force) of the transfer member 62 on the artificial fingerprint liquid supplying member 61 based on a detection signal outputted from the pressure sensor 2b when the transfer member 62 is pressed onto the artificial fingerprint liquid supplying member 61 by the moving mechanism 2a, and also measures elapsed time from the start of the pressing. Here, if the pressing force when the transfer member 62 is pressed on the artificial fingerprint liquid supplying member 61 is expressed as "w1" (as one example, $50g/cm^2$ to $5000g/cm^2$), the time the artificial fingerprint liquid supplying member 61 is pressed on the transfer member 62 is expressed as "t1" (as one example 5 to 60 seconds), a parameter determined by factors for the transfer member 62 such as the material, the surface roughness (average roughness), wettability (surface energy), and hardness (elasticity) is expressed as "p", a value determined based on factors for the artificial fingerprint liquid supplying member 61 such as the material, surface roughness, wettability (surface energy), hardness (elasticity), the amount of artificial fingerprint liquid present on the surface of the artificial fingerprint liquid supplying member 61 is expressed as "s", and the amount of artificial fingerprint liquid attached to the transfer member 62 (per unit area) is expressed as "R1", R1 can be expressed as shown by Equation (1) below.

$$R1 = f1(w1, t1, p, s) \quad \cdots (1)$$

Here, R1 in Equation (1) (the amount of the artificial fingerprint liquid attached to the transfer member 62) has a large effect on the amount of artificial fingerprint liquid attached on the incident surface 13a when the transfer member 62 is pressed onto the incident surface 13a. Accordingly, based on the pressing force ("w1" above) calculated based on the detection signal from the pressure sensor 2b, the elapsed time from the start of the pressing ("t1" above), various conditions relating to the transfer member 62 ("p" above), and various conditions relating to the artificial fingerprint liquid supplying member 61 ("s" above), the control device 4 controls the moving mechanism 2a so that the amount ("R1" above) of the artificial fingerprint liquid attached to the transfer member 62 is an amount set in advance (as one example, $30mg/m^2$ to $2010mg/m^2$). More specifically, when controlling the moving mechanism 2a, the control device 4 adjusts the pressing force of the transfer member 62 on the artificial fingerprint liquid supplying member 61 and the time the transfer member 62 is pressed on the artificial fingerprint liquid supplying member 61 in the ranges given above. By doing so, a predetermined amount of artificial fingerprint liquid is attached to the transfer member 62. It should be noted that it is possible to use a construction where the moving mechanism 2a moves the transfer member 62 by a preset amount towards the artificial fingerprint liquid supplying member 61 and presses the transfer member 62 of the artificial fingerprint liquid supplying member 61 for a predetermined time to attach a predetermined amount of the artificial fingerprint liquid onto the transfer member 62.

Next, as shown in FIG. 9, the transfer member 62 onto which the artificial fingerprint liquid has been attached is pressed onto the incident surface 13a. Here, if the pressing force when the transfer member 62 is pressed onto the incident surface 13a of the medium is expressed as "w2" (as one example, 50g/cm$^2$ to 5000g/cm$^2$), the time the transfer member 62 is pressed onto the incident surface 13a is expressed as "t2" (as one example, 5 to 60 seconds), a parameter determined by factors for the incident surface 13a of the optical recording medium 10 such as the surface roughness (average roughness), wettability (surface energy), and hardness (elasticity) is expressed as "d", and the amount of the artificial fingerprint liquid attached to the incident surface 13a (per unit area) is expressed as "R2", R2 can be expressed as shown by Equation (2) below.

$$R2 = f2(w2, t2, p, R1, d) \quad \cdots (2)$$

In this case, "R2" in Equation (2) above (the amount of artificial fingerprint liquid attached to the incident surface 13a) has a large effect on the amount of return light for the emitted laser beam 50 during the reading of data from the optical recording medium 10 during step S13 of the defective/non-defective judging process 100. As a result, the "R2" of Equation (2) has a large effect on the judgment standard (in this example, the "error rate") in step S14. Accordingly, the control device 4 controls the moving mechanism 2a so that the pressing force ("w2" above) calculated based on the detection signal from the pressure sensor 2b and the elapsed time ("t2" above) from the start of pressing are in a preset state, which result in the artificial fingerprint liquid being attached to the incident surface 13a at constant conditions. In this case, out of the parameters in Equation (2) above, "w2", "t2", "p", and "R1" are constant values, and as a result, an amount ("R2" above) of artificial fingerprint liquid in accordance with the various conditions ("d" above) relating to the optical recording medium 10 is applied to the incident surface 13a. It should be noted that as one example, the attached amount "R2" of the artificial fingerprint liquid is around 20mg/m$^2$ to 2000mg/m$^2$ on a (non-defective) optical recording medium 10 used as a standard.

It should be noted that the process that presses the transfer member 62 onto the artificial fingerprint liquid supplying member 61 in step 12 of the defective/non-defective judging process 100 (a "first substep" for the present invention) and a process that presses the transfer member 62 onto the incident surface 13a (a "second substep" for the present invention) can be carried out manually by an operator, for example. However, to make the conditions (parameters aside from the various conditions "d" relating to the optical recording medium 10) relating to the attachment of the artificial fingerprint liquid onto the incident surface 13a constant every time the defective/non-defective judging process 100 is executed (i.e., to achieve the required reproducibility for the attachment conditions), the process should preferably be carried out automatically or semiautomatically by an apparatus such as the transfer device 2 described above. Also, when both of the processes described above are carried out by an apparatus such as the transfer device 2, by fixing "w1" and "t1" in Equation (1) above and "w2" and "t2" in Equation (2) above, the transfer device 2 can be fabricated cheaply and easily. Since the changes in the amounts "R1" and "R2" when "w1", "t1", "w2", and "t2" change are comparatively small and there is the danger of the reproducibility of the attached amount of artificial fingerprint liquid drastically falling when "w1", "t1", "w2", and "t2" radically increase or decrease, the effective ranges of variation of "w1", "t1", "w2", and "t2" are not very wide. For this reason also, it is logical to set "w1", "t1", "w2", and "t2" at predetermined values. In this way, by fixing "w1", "t1", "w2", and "t2", it is possible to regard these variables as parameters incorporated into the transfer device 2.

Accordingly, by newly defining parameters "M1" (M1=g1(w1,t1,p)) and "M2" (M2=g2(w2,t2,p)) that are unique to the transfer device 2, Equation (1) above can be rearranged to Equation (3) below.

$$R1 = f1(M1, s) \quad \cdots (3)$$

In the same way, Equation (2) above can be rearranged to Equation (4) below.

$$R2 = f2(M2, R1, d) \quad \cdots (4)$$

As should be clear from Equation (4) above, the amount "R2" of artificial fingerprint liquid attached onto the incident surface 13a is determined by three parameters, "M2", "R1" and "d". In this case, since "M2" is constant due to the use of the transfer device 2 and "d" is a parameter showing the state of the optical recording medium 10 being tested, "R2" is effectively adjusted to the desired value (a value suited to testing) by changing "R1". In this case, since the object of the present invention is to reject optical recording media onto which an amount of artificial fingerprint liquid that exceeds a predetermined amount is attached when the artificial fingerprint liquid is attached under predetermined conditions: i.e., optical recording media onto which artificial fingerprint liquid is easily attached as defective when the value "d" exceeds a predetermined threshold ($d_{threshold}$) and also to reject as defective optical recording media whose error rate or the like (signal quality of the reproduction signal) is remarkably worsened by the attachment of fingerprints, in the defective/non-defective judging process 100, it is necessary to set a threshold ($R2_{threshold}$) for the attached amount of artificial fingerprint liquid (R2) at which the error rate relating to the reproduction signal exceeds a predetermined threshold for a case where the parameter "d" that relates to the optical recording medium 10 (being tested) exceeds the predetermined threshold ($d_{threshold}$). That is, it is necessary to adjust "R1" using the transfer device 2 so as to satisfy

$$R2_{threshold} = f2 \ (M2, \ R1, \ d_{threshold})$$

On the other hand, to adjust the amount "R1" of artificial fingerprint liquid attached to the transfer member 62, the state ("s" above) of the artificial fingerprint liquid supplying member 61 is adjusted. Here, "s" depends on factors such as the material, surface roughness, wettability, and hardness of the artificial fingerprint liquid supplying member 61 and the amount of artificial fingerprint liquid on the surface of the artificial fingerprint liquid supplying member 61, and out of such factors, the amount of artificial fingerprint liquid on the surface can be changed relatively easily. Accordingly, it is preferable to keep the amount "R1" of artificial fingerprint liquid attached onto the transfer member 62 constant by adjusting the amount of artificial fingerprint liquid attached to (applied onto) the artificial fingerprint liquid supplying member 61 to keep the amount of artificial fingerprint liquid present on the surface of the artificial fingerprint liquid supplying member 61 constant (as one example, an amount that has 30mg/m$^2$ to 2010mg/m$^2$ attached onto the transfer member 62). More specifically, as one example, every time the artificial fingerprint liquid is attached onto the transfer member 62 from the artificial fingerprint liquid supplying member 61 by applying (attaching) a predetermined amount of the artificial fingerprint liquid uniformly onto the surface of the artificial fingerprint liquid supplying member 61 by spin coating or dip coating, the pressing position of the transfer member 62 on the artificial fingerprint liquid supplying member 61 is changed (with the artificial fingerprint liquid being uniformly applied across an entire region of the artificial fingerprint liquid supplying member 61 pressed by the transfer member 62). By doing so, it is possible to always attach the same amount of artificial fingerprint liquid to the transfer member 62. Accordingly, during the defective/non-defective judging process 100 described above, the unique parameters "M1" and "M2", (where "M1"="M2" is possible) should be set in the transfer device 2 first with "s" then being set in accordance with the set "M1" and "M2". This method of setting is included in the preferred aspects of the present invention. Also, the value "s" may be determined by preparing a medium ($d_{threshold}$) that is an appropriate standard and measuring the error rate after forming an artificial fingerprint on this medium. When doing so, the decision as to what kind of information recording medium to use as the standard disc may be made as appropriate based on consultation between the technicians who carry out the defective/non-defective judging process 100 and the medium manufacturer who requested the testing.
It should be noted that aside from the method described above, it is also possible to use a method where not only "M1" but also "s" is set in advance at a freely chosen value. That is, in Equations (3) and (4), not only "M1" but also "s" may be set at a fixed value to make "R1" a constant. Accordingly, "M2" and "R1" in Equation (4) become both constants, so that "R2" changes in accordance with only "d". For this reason, by keeping "M2" and "R1" constant in advance, it is possible to carry out testing where the error rate is measured in a state where an amount of artificial fingerprint liquid in accordance with the various states ("d" above) of the optical recording medium 10 and the like has been attached.
On the other hand, if an excess amount of the artificial fingerprint liquid "R1" attached to the transfer member 62 is expressed as "r" and an amount produced by subtracting this excess amount "r" from "R1" (i.e., an amount produced when "r" is wiped off the transfer member 62 onto which "R1" of the artificial fingerprint liquid has been attached) is set as "R1'" (R1'=R1-r), "R2" is expressed by Equation (5) below.

$$R2 = f2(M2,R1',d) \quad \cdots(5)$$

As shown by Equation (5) above, by removing the excess amount "r" from the amount "R1" of the artificial fingerprint liquid attached to the transfer member 62 by any method, it is possible to produce a state where the amount "R1'" without the excess fingerprint liquid is attached to the transfer member 62. In this case, to remove the excess fingerprint liquid, as one example it is possible to press the transfer member 62 on which the amount "R1" of the artificial fingerprint liquid has been attached onto the surface of a removing substrate or the like (not shown) before the transfer member 62 is pressed on the optical recording medium 10 being tested. In this case, by appropriately adjusting the material of the removing substrate and conditions for pressing onto the substrate (such as the pressing force and the pressing time), a freely chosen amount "r" of the artificial fingerprint liquid can be removed from the transfer member 62 and as a result, it is possible to keep the amount "R1'" constant at a desired amount. However, carrying out this kind of method (i.e., removing excess artificial fingerprint liquid) makes the defective/non-defective judging process 100 complex and carries the risk of causing fluctuations in the conditions for the amount of artificial fingerprint liquid attached to the incident surface 13a (the risk of leading to a fall in reproducibility for the testing). Accordingly, as described above, the amount "R1" should preferably be kept constant by adjusting the state "s" of the artificial fingerprint liquid supplying member 61 (i.e., the amount of the artificial fingerprint liquid on the surface of the artificial fingerprint liquid supplying member 61).

It should be noted that as described above, the value "d" is constant for the same type of optical recording medium 10 and the like, so that when "M2" and "R1" are kept constant, this results in "R2" also being constant. More specifically, as one example when testing optical recording media where the multilayer structure and materials of the support substrate 11, the light transmitting layer 12, and the hard coat layer 13 are the same and only the recording material forming the recording layer 14 differs, "d" above is the same value for the respective optical recording media. Accordingly, by keeping "M2 and "R1" constant in advance, it is possible to carry out testing by measuring the error rate in a state where a constant amount of artificial fingerprint liquid is attached to the respective optical recording media.

As described above, according to the method of testing the optical recording medium 10 using the optical recording medium testing apparatus 1 (i.e., the defective/non-defective judging process 100), a step (S12) that attaches an artificial fingerprint onto the incident surface 13a using the artificial fingerprint transfer device 2, a step (S13) that reproduces a signal recorded in the fingerprint-attached region using the recording/reproducing device 3, and a step (S14) that judges whether the optical recording medium 10 or the like is defective or non-defective based on the signal quality of the reproduction signal using the control device 4 are carried out, so that the optical recording medium 10 or the like can be judged to be defective or non-defective based on whether the signal quality (in this example, error rate) of the reproduction signal when an artificial fingerprint has been attached to the incident surface 13a exceeds a standard value. Accordingly, information recording media (the optical recording medium 10 or the like) for which the signal quality of the reproduction signal remarkably deteriorates due to fingerprints adhering to the incident surface 13a can be rejected as substandard, and the distribution of such information recording media onto the market can be avoided. By doing so, it is possible to sufficiently ensure the reliability of information recording media that are to be used as bare discs in particular.

In addition, according to the method of testing the optical recording medium 10 using the optical recording medium testing apparatus 1, by using error rate as a measure of signal quality in the step of judging whether the medium is defective or non-defective, it is possible to directly compare the effects of fingerprints attached to the incident surface 13a on the reproduction signal.

In addition, according to the method of testing the optical recording medium 10 using the optical recording medium testing apparatus 1, by carrying out the step of recording a signal in the fingerprint-attached region (step S11) before the step of attaching the artificial fingerprint (step S12) is carried out, it is possible to directly evaluate the effect on the reproduction characteristics of fingerprints attached to the incident surface 13a.

Also, with the method of testing the optical recording medium 10 using the optical recording medium testing apparatus 1, a first substep that attaches artificial fingerprint liquid by pressing the transfer member 62 onto the artificial fingerprint liquid supplying member 61, and a second substep that presses the transfer member 62 onto the incident surface 13a of the optical recording medium 10 or the like are carried out as the step that attaches the artificial fingerprint, so that artificial fingerprints can be formed on (transferred onto) the incident surface 13a using a comparatively simple method.

In addition, with the method of testing the optical recording medium 10 using the optical recording medium testing apparatus 1, by keeping the pressing force of the transfer member 62 on the artificial fingerprint liquid supplying member 61 constant during the step that attaches the artificial fingerprint, it is possible to attach a fixed amount of the artificial fingerprint liquid onto the transfer member 62, so that the artificial fingerprint liquid can be attached to respective information recording media under the same conditions when testing a plurality of information recording media (in this example, the optical recording medium 10 or the like). Accordingly, since the amount of the artificial fingerprint liquid attached to the incident surface 13a, which is closely related to the signal quality (the error rate or the like) during testing, changes in accordance with the fingerprint attachment characteristics ("d" above) of the respective information recording media, it is possible to appropriately judge whether the respective information recording media are defective or non-defective.

Also, with the method of testing the optical recording medium 10 using the optical recording medium testing apparatus 1, by keeping the pressing force of the transfer member 62 on the incident surface 13a constant in the step that attaches the artificial fingerprint, when testing a plurality of information recording media (in this example, the optical recording medium 10 or the like), the amount of artificial fingerprint liquid attached to the incident surface 13a, which is closely related to the signal quality (the error rate or the like) during testing, changes in accordance with the fingerprint attachment characteristics of the respective information recording media, so that it is possible to appropriately judge whether the respective information recording media are defective or non-defective.

Also, with the method of testing the optical recording medium 10 using the optical recording medium testing apparatus 1, by keeping the amount of artificial fingerprint liquid attached to the artificial fingerprint liquid supplying member 61 constant (by applying the artificial fingerprint liquid uniformly across the entire region of the artificial fingerprint liquid supplying member 61 pressed by the transfer member 62), it is possible to apply a constant amount of the artificial fingerprint liquid to the transfer member 62, so that when testing a plurality of information recording media (in this example, the optical recording medium 10 or the like) artificial fingerprints can be attached to the respective information recording media under the same conditions. Accordingly, the amount of artificial fingerprint liquid attached to the incident surface 13a, which is closely related to the signal quality (the error rate or the like), changes in accordance with the fingerprint attachment characteristics ("d" above) of the respective information recording media, so that it is possible to appropriately judge whether the respective information recording media are defective or non-defective.

Also, with the method of testing the optical recording medium 10 using the optical recording medium testing apparatus 1, by carrying out a step that reproduces a signal in an environment where the condition λ/NA is at most 640nm is satisfied, out of optical recording media 10 that have a premise of being used in such an environment (information recording media (in this example, the optical recording medium 10 or the like) where the beam spot of the laser beam 50 on the incident surface 13a is extremely small and the effect of attached fingerprints on the signal characteristics is large), information recording media for which the signal quality of the reproduction signal remarkably deteriorates due to fingerprints adhering to the incident surface 13a can be rejected as substandard, and the distribution of such information recording media onto the market can be avoided.

Also, with the method of testing the optical recording medium 10 using the optical recording medium testing apparatus 1, by testing the optical recording medium 10 or the like where the thickness of the light transmitting layer 12 is 200μm or below, out of optical recording media 10 that have a premise of being used in this kind of environment (information recording media (in this example, the optical recording medium 10 or the like) where the beam spot of the laser beam 50 on the incident surface 13a is extremely small and the effect of attached fingerprints on the signal characteristics is large), information recording media for which the signal quality of the reproduction signal remarkably deteriorates due to adhering fingerprints can be rejected as substandard, and the distribution of such information recording media onto the market can be avoided.

Also, with the method of testing the optical recording medium 10 according to the optical recording medium testing apparatus 1, by testing the optical recording medium 10 or the like that is constructed for use as a bare disk, out of information recording media (in this example, the optical recording media 10 or the like) that have a premise of being used in an environment where the medium is not enclosed in a cartridge or the like which makes it easy for the medium to become marked with fingerprints, information recording media for which the signal quality of the reproduction signal remarkably deteriorates due to adhering fingerprints can be rejected as substandard, and the distribution of such information recording media onto the market can be avoided.

Next, another method of testing the optical recording medium 10 or the like using the optical recording medium testing apparatus 1 will be described with reference to the drawings. It should be noted that out of the processes carried out by the optical recording medium testing apparatus 1, parts that are the same as the processes in the defective/non-defective judging process 100 described above will not be described.

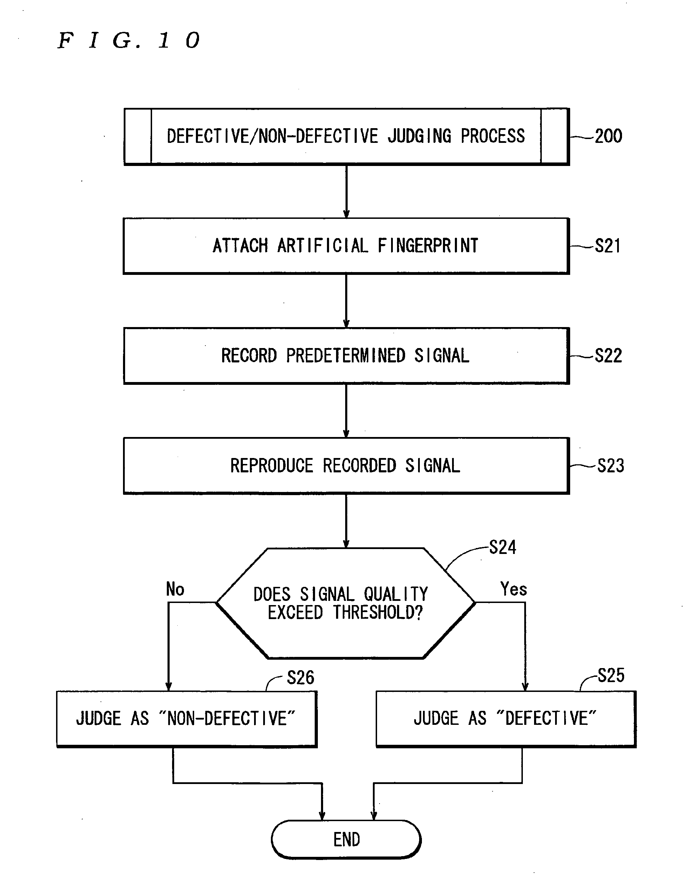

When testing a recordable or rewritable information recording medium, first the information recording medium (for example, the optical recording medium 10) to be tested is set in the optical recording medium testing apparatus 1 and the testing process (defective/non-defective judging process) is commenced. In response, the control device 4 of the optical recording medium testing apparatus 1 starts the defective/non-defective judging process 200 shown in FIG. 10. The defective/non-defective judging process 200 is one example of a method of testing that carries out a "step of recording a signal" for the present invention after a "step of attaching an artificial fingerprint" for the present invention, and carries out the steps S11 and S12 of the defective/non-defective judging process 100 described above in reverse order. More specifically, in the defective/non-defective judging process 200, the control device 4 first controls the transfer device 2 to attach an artificial fingerprint to the incident surface 13a of the optical recording medium 10 (the "step of attaching an artificial fingerprint" for the present invention: step S21). When doing so, in the same way as in step S12 of the defective/non-defective judging process 100 described above, the artificial fingerprint liquid is attached to the incident surface 13a under predetermined conditions set in advance. Next, the control device 4 controls the recording/reproducing device 3 to have a predetermined signal recorded in a region including the region (fingerprint-attached region) to which the artificial fingerprint has been attached (the "step of recording a signal" for the present invention": step S22). In this defective/non-defective judging process 200, the steps carried out thus far differ to the defective/non-defective judging process 100 and the subsequent steps are carried out in the same way as step S13 in the defective/non-defective judging process 100.

More specifically, the control device 4 controls the recording/reproducing device 3 to have the signal recorded in step S22 reproduced (a "step of reproducing a signal" for the present invention that is the same as step S13 in the defective/non-defective judging process 100: step S23), and measures the signal quality of the reproduction signal outputted from the recording/reproducing device 3 (a "step of judging whether defective or non-defective" that is the same as step S14 in the defective/non-defective judging process 100: step S24). At this point, when the signal quality (as one example, error rate) exceeds a predetermined threshold, the control device 4 judges that the optical recording medium 10 is "defective" (step S25), and when the predetermined threshold is not exceeded, judges that the optical recording medium 10 is "non-defective" (step S26). By doing so, the defective/non-defective judging process 200 is completed. It should be noted that although the defective/non-defective judging process 200 is carried out to test optical recording medium 10 in the example described above, the same process can be carried out for the optical recording media 20, 30, and 40 and other information recording media to test for defective/non-defective media.

In this way, according to the method of testing (the defective/non-defective judging process 200) the optical recording medium 10 using the optical recording medium testing apparatus 1, after the step of attaching the artificial fingerprint (step S21), the step of recording a signal in the fingerprint-attached region (step S22) is carried out so that it is possible to carry out testing with consideration to the effects of fingerprints attached to the incident surface 13a not only on the reproduction characteristics but also on the recording characteristics.

Next, another method of testing the optical recording medium 10 and the like using the optical recording medium testing apparatus 1 will be described with reference to the drawings. It should be noted that out of the processes carried out by the optical recording medium testing apparatus 1, processes that are the same as the processes in the defective/non-defective judging processes 100, 200 described above will not be described.

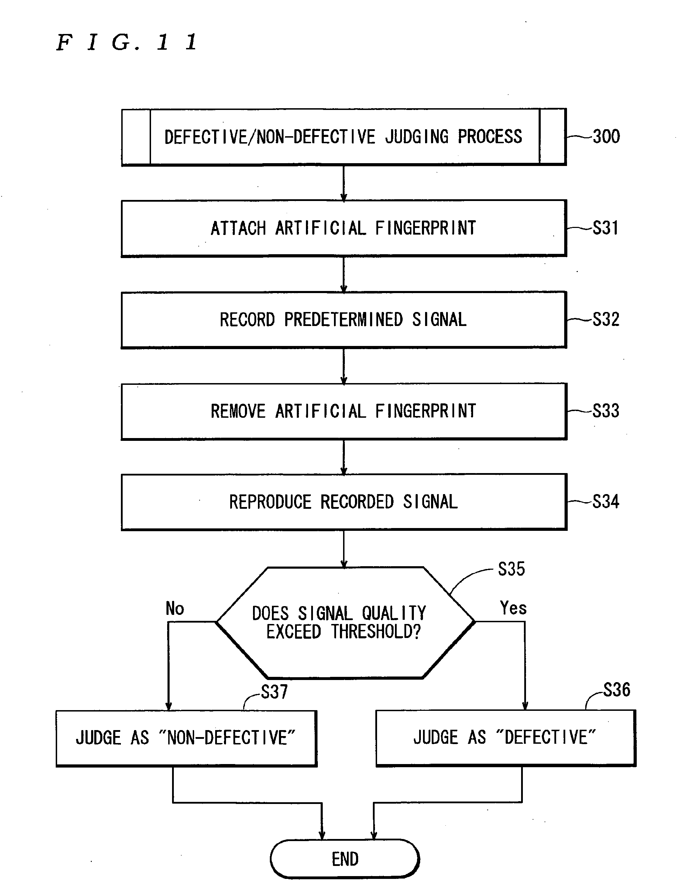

For example, for a recordable and rewritable information recording medium, to sufficiently evaluate the effect on the recording characteristics of attached fingerprints, before executing a step of reproducing a signal, the artificial fingerprint attached in the step of attaching the artificial fingerprint should preferably be removed and the information recording medium should be tested with the signal quality of the reproduction signal in this state as the subject of testing. More specifically, first, the information recording medium (for example, the optical recording medium 10) being tested is set in the optical recording medium testing apparatus 1 and a start to the testing process (the defective/non-defective judging process) is indicated. In response, the control device 4 of the optical recording medium testing apparatus 1 starts the defective/non-defective judging process 300 shown in FIG. 11. In the defective/non-defective judging process 300, the control device 4 first controls the transfer device 2 to attach an artificial fingerprint to the incident surface 13a of the optical recording medium 10 (the "step of attaching an artificial fingerprint": step S31), and then controls the recording/reproducing device 3 to record a predetermined signal in the region on which the artificial fingerprint has been attached (the "step of recording a signal" for the present invention: step S32).

Next, the artificial fingerprint attached in step S31 is removed (step S33). In this case, as one example, the artificial fingerprint liquid attached to the incident surface 13a should preferably be wiped off using a rag (as one example, a BEMCOT LINT FREE CT-8 manufactured by ASAHI KASEI FIBERS CORPORATION, for example). The number of wipes should be set in a range of 6 to 400 inclusive with a load of 1.0 to 10N/cm$^2$, and preferably in a range of 10 to 200 inclusive, and with it being especially preferable to then remove the artificial fingerprint liquid remaining on the incident surface 13a using a volatile organic solvent such as methanol, ethanol, methylethyl ketone, or acetone. Next, the control device 4 controls the recording/reproducing device 3 to reproduce the signal recorded in step S32 (the "step of reproducing a signal" for the present invention: step S34). After this, the control device 4 measures the signal quality of the reproduction signal (as one example, the error rate) and judges whether the signal quality exceeds a predetermined threshold (the "step of judging defective or non-defective" for the present invention: step S35). When the predetermined threshold is exceeded, the optical recording medium 10 is judged to be "defective" (step S36), while when the predetermined threshold is not exceeded, the optical recording medium 10 is judged to be "non-defective" (step S37). By doing so, the defective/non-defective judging process 300 is completed.

In the defective/non-defective judging process 300, by removing the artificial fingerprints after the predetermined signal has been recorded in step S32 and before the signal is reproduced in step S34, the effect of the fingerprints adhering to the incident surface 13a on the reproduction characteristics are eradicated and the effect of the adhering fingerprints on the recording characteristics can be reliably evaluated. It should be noted that although the defective/non-defective judging process 300 is carried out to test the optical recording medium 10 in the above example, it is also possible to carry out the same process for the optical recording media 20, 30, 40 and other types of information recording media to test whether the media are defective or non-defective.

Next, yet another method of testing the optical recording medium 10 or the like using the optical recording medium testing apparatus 1 will be described with reference to the drawings. It should be noted that out of the processing carried out by the optical recording medium testing apparatus 1, processes that are the same as in the defective/non-defective judging processes 100, 200, and 300 described above will not be described.

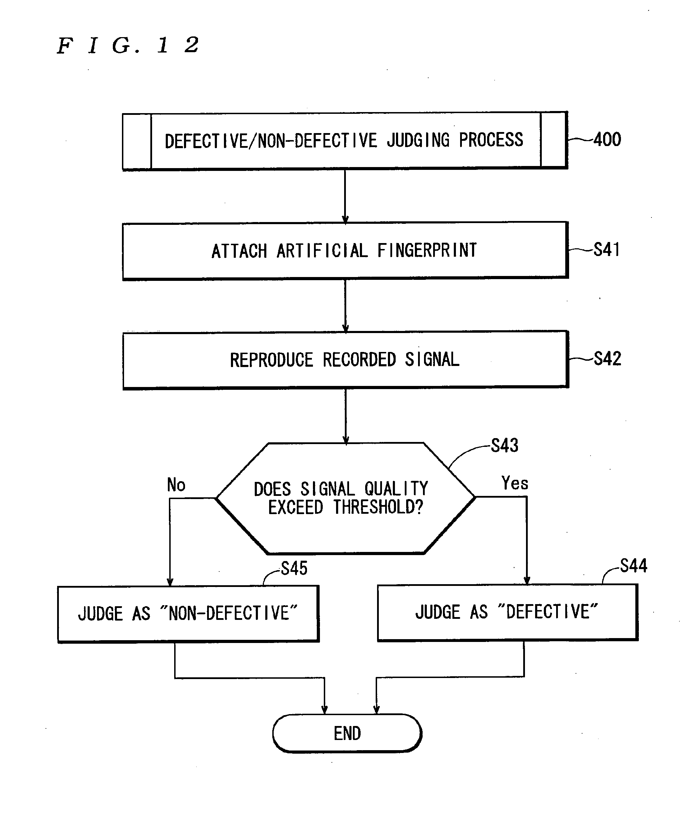

For example, when testing a read-only (ROM-type) information recording medium (optical recording medium), first the optical recording medium is set in the optical recording medium testing apparatus 1 and a start of the testing process (defective/non-defective judging process) is indicated. In response, the control device 4 of the optical recording medium testing apparatus 1 starts a defective/non-defective judging process 400 shown in FIG. 12. In this defective/non-defective judging process 400, the control device 4 controls the artificial fingerprint transfer device 2 to attach an artificial fingerprint to a region in which a signal has been recorded on an incident surface of the optical recording medium (the "step of attaching an artificial fingerprint" for the present invention: step S41). Next, the control device 4 controls the recording/reproducing device 3 to reproduce the signal recorded in advance in the region in which the artificial fingerprint has been attached (the "step of reproducing a signal" for the present invention: step S42), measures the signal quality (as one example, the error rate) of the reproduction signal, and judges whether a predetermined threshold is exceeded (a "step of judging defective or non-defective" for the present invention: step S43). At this point, when the signal quality exceeds the predetermined threshold, the optical recording medium is judged to be "defective" (step S44), while when the predetermined threshold is not exceeded, the optical recording medium is judged to be "non-defective" (step S45). By doing so, the defective/non-defective judging process 400 is completed. In this way, in the same way as the optical recording medium or the like described above, a read-only optical recording medium can be subjected to a defective/non-defective judgment that takes the effect on the reproduction characteristics of adhering fingerprints into account.

It should be noted that the present invention is not limited to the embodiments described above, and a variety of modifications are possible within the scope of the invention defined by the claims. Such modifications are obviously included within the scope of the invention. For example, although several examples of preferable information recording media that can be tested are shown in FIGS. 3 to 7, the information recording medium that can be tested using the present invention is not limited to such media. As one example, it is also possible to carry out the defective/non-defective judging processes 100, 200, 300, and 400 on a conventional information recording medium such as a CD or a DVD using the optical recording medium testing apparatus 1 described above.

INDUSTRIAL APPLICABILITY

As described above, with a method of testing an information recording medium according to the present invention, by carrying out a step of attaching an artificial fingerprint onto an incident surface, a step of reproducing a signal recorded in the fingerprint-attached region, and a step of judging whether the information recording medium is defective or non-defective based on a signal quality of the reproduction signal, it is possible to judge whether the information recording medium is defective or non-defective based on whether the signal quality of the reproduction signal exceeds a standard value when an artificial fingerprint has been attached to the incident surface. Accordingly, information recording media for which the signal quality of the reproduction signal remarkably deteriorates due to fingerprints adhering to the incident surface can be rejected as substandard, and the distribution of such information recording media onto the market can be avoided. By doing so, it is possible to sufficiently ensure the reliability of information recording media that are to be used as bare discs in particular.

DESCRIPTION OF REFERENCE NUMERALS

| 1 | optical recording medium testing apparatus |
| 2 | artificial fingerprint transfer device |
| 2a | moving mechanism |
| 2b | pressure sensor |
| 3 | recording/reproducing device |
| 4 | control device |
| 10, 20, 30, 40 | optical recording medium |
| 12 | light transmitting layer |
| 13a | incident surface |
| 50 | laser beam 50 |
| 51 | objective lens |
| 61 | artificial fingerprint liquid supplying member |
| 62 | transfer member |
| 100, 200, 300, 400 | defective/non-defective judging processe |

**Claims**

1. A method of testing an information recording medium, comprising:

   a step of attaching an artificial fingerprint to an incident surface of an information recording medium;
   a step of reproducing a signal recorded in an attached region to which the artificial fingerprint has been attached; and
   a step of judging whether the information recording medium is defective or non-defective based on a signal quality of the reproduced signal.

2. A method of testing an information recording medium according to Claim 1,
   wherein the step of judging judges whether the information recording medium is defective or non-defective based on an error rate as the signal quality.

3. A method of testing an information recording medium according to Claim 1 or Claim 2,
   further comprising, before the step of attaching the artificial fingerprint, a step of recording the signal in at least the attached region.

4. A method of testing an information recording medium according to Claim 1 or Claim 2,
   further comprising, after the step of attaching the artificial fingerprint, a step of recording the signal in at least the attached region.

5. A method of testing an information recording medium according to any one of Claim 1 to Claim 4,
   comprising, as the step of attaching the artificial fingerprint, at least a first substep of pressing a transfer member onto an artificial fingerprint liquid supplying member, which has been impregnated with artificial fingerprint liquid or to which artificial fingerprint liquid has been attached, to attach the artificial fingerprint liquid to the transfer member and a second substep of pressing the transfer member, onto which the artificial fingerprint liquid has been attached, onto the incident surface of the information recording medium.

6. A method of testing an information recording medium according to Claim 5,
   wherein when testing a plurality of information recording media, a pressing pressure of the transfer member on the artificial fingerprint liquid supplying member is kept constant in the step of attaching the artificial fingerprint.

7. A method of testing an information recording medium according to Claim 5 or Claim 6,
   wherein when testing a plurality of information recording media, a pressing pressure of the transfer member on the incident surface is kept constant in the step of attaching the artificial fingerprint.

8. A method of testing an information recording medium according to any one of Claim 5 to Claim 7,
   wherein an amount of the artificial fingerprint liquid impregnated in or attached to the artificial fingerprint liquid supplying member is kept at a predetermined amount.

9. A method of testing an information recording medium according to any one of Claim 1 to Claim 8,
   wherein the step of reproducing the signal is carried out in an environment that satisfies a condition where $\lambda/NA$ is at most 640nm where $\lambda$ is a wavelength of a laser beam used to reproduce the signal and NA is a numerical aperture of an objective lens for focusing the laser beam.

10. A method of testing an information recording medium according to Claim 9,
    wherein an information recording medium whose light transmitting layer is no thicker than $200\mu$m is tested.

11. A method of testing an information recording medium according to any one of Claim 1 to Claim 10,
    wherein the information recording medium that is tested is constructed for use as a bare disc.

12. An information recording medium testing apparatus, comprising:

    a fingerprint attaching unit configured to attach an artificial fingerprint onto an incident surface of an information recording medium;
    a signal reproducing unit configured to reproduce a signal recorded in an attached region to which the artificial fingerprint has been attached; and

a judging unit configured to judge whether the information recording medium is defective or non-defective based on a signal quality of the reproduced signal.

# FIG. 1

*F I G. 2*

```
┌─┬─────────────────────────────────────────────┬─┐
│ │  DEFECTIVE/NON-DEFECTIVE  JUDGING  PROCESS  │ │──100
└─┴─────────────────────────────────────────────┴─┘
                        │
                        ▼
┌─────────────────────────────────────────────────┐
│         RECORD  PREDETERMINED  SIGNAL            │──S11
└─────────────────────────────────────────────────┘
                        │
                        ▼
┌─────────────────────────────────────────────────┐
│         ATTACH  ARTIFICIAL  FINGERPRINT          │──S12
└─────────────────────────────────────────────────┘
                        │
                        ▼
┌─────────────────────────────────────────────────┐
│           REPRODUCE  RECORDED  SIGNAL            │──S13
└─────────────────────────────────────────────────┘
                        │
                        ▼
                                        S14
      No  ╱‾‾‾‾‾‾‾‾‾‾‾‾‾‾‾‾‾‾‾‾‾‾‾‾╲  Yes
     ┌────    DOES  SIGNAL  QUALITY    ────┐
     │    ╲   EXCEED  THRESHOLD?    ╱      │
     │     ╲_____╱    │
     │              S16                    │      S15
     ▼                                     ▼
┌──────────────────────────┐   ┌──────────────────────────┐
│ JUDGE  AS  "NON-DEFECTIVE"│   │  JUDGE  AS  "DEFECTIVE"  │
└──────────────────────────┘   └──────────────────────────┘
     │                                     │
     └──────────────┐        ┌─────────────┘
                    ▼        ▼
                 (       END       )
```

*F I G .  3*

*F I G .  4*

EP 1 696 431 A1

F I G. 5

23

FIG. 6

F I G. 7

40

42

44

43

14

41

13

13 a

50

51

*F I G. 8*

61   62   1 3 a

1 0 (2 0, 3 0, 4 0)

*F I G. 9*

61   6 2   1 3 a

1 0 (2 0, 3 0, 4 0)

*F I G. 1 0*

```
┌─────────────────────────────────────────────┐
│  DEFECTIVE/NON-DEFECTIVE JUDGING PROCESS      │──200
└─────────────────────────────────────────────┘
                      │
                      ▼
┌─────────────────────────────────────────────┐
│         ATTACH ARTIFICIAL FINGERPRINT         │──S21
└─────────────────────────────────────────────┘
                      │
                      ▼
┌─────────────────────────────────────────────┐
│         RECORD PREDETERMINED SIGNAL           │──S22
└─────────────────────────────────────────────┘
                      │
                      ▼
┌─────────────────────────────────────────────┐
│         REPRODUCE RECORDED SIGNAL             │──S23
└─────────────────────────────────────────────┘
                      │
                      ▼
                                          ──S24
       No    ╱  DOES SIGNAL QUALITY  ╲   Yes
     ◄───────  EXCEED THRESHOLD?      ───────►
             ╲                       ╱
              
   ──S26                              ──S25
┌──────────────────────┐    ┌──────────────────────┐
│ JUDGE AS "NON-DEFECTIVE"│  │  JUDGE AS "DEFECTIVE" │
└──────────────────────┘    └──────────────────────┘
              │                    │
              └────────┬───────────┘
                       ▼
                  (   END   )
```

*F I G. 1 1*

DEFECTIVE/NON-DEFECTIVE JUDGING PROCESS — 300

↓

ATTACH ARTIFICIAL FINGERPRINT — S31

↓

RECORD PREDETERMINED SIGNAL — S32

↓

REMOVE ARTIFICIAL FINGERPRINT — S33

↓

REPRODUCE RECORDED SIGNAL — S34

↓

DOES SIGNAL QUALITY EXCEED THRESHOLD? — S35

No ← / Yes →

JUDGE AS "NON-DEFECTIVE" — S37    JUDGE AS "DEFECTIVE" — S36

↓                                ↓

END

*F I G. 1 2*

```
┌──────────────────────────────────────────────────┐
│┌┐  DEFECTIVE/NON-DEFECTIVE JUDGING PROCESS   ┌┐    │──400
│└┘                                            └┘    │
└──────────────────────────────────────────────────┘
                        │
                        ▼
┌──────────────────────────────────────────────────┐
│           ATTACH ARTIFICIAL FINGERPRINT           │──S41
└──────────────────────────────────────────────────┘
                        │
                        ▼
┌──────────────────────────────────────────────────┐
│              REPRODUCE RECORDED SIGNAL             │──S42
└──────────────────────────────────────────────────┘
                        │
                        ▼
                                              ──S43
        ╱───────────────────────────────╲
   No  ╱      DOES SIGNAL QUALITY         ╲   Yes
  ◀───〈       EXCEED THRESHOLD?            〉───▶
       ╲                                   ╱
        ╲─────────────────────────────────╱
   │           ──S45                          │        ──S44
   ▼                                          ▼
┌──────────────────────────┐    ┌──────────────────────────┐
│ JUDGE AS "NON-DEFECTIVE" │    │   JUDGE AS "DEFECTIVE"   │
└──────────────────────────┘    └──────────────────────────┘
           │                              │
           └──────────┐        ┌──────────┘
                      ▼        ▼
                 ╭─────────────────╮
                 │       END       │
                 ╰─────────────────╯
```

**EP 1 696 431 A1**

## INTERNATIONAL SEARCH REPORT

| | International application No. |
|---|---|
| | PCT/JP2004/018172 |

**A. CLASSIFICATION OF SUBJECT MATTER**
Int.Cl⁷ G11B7/26

According to International Patent Classification (IPC) or to both national classification and IPC

**B. FIELDS SEARCHED**

Minimum documentation searched (classification system followed by classification symbols)
Int.Cl⁷ G11B7/26

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2005 |
| Kokai Jitsuyo Shinan Koho | 1971–2005 | Jitsuyo Shinan Toroku Koho | 1996–2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| P,X | JP 2004-171711 A (Pioneer Electronic Corp.), 17 June, 2004 (17.06.04), Claims 1 to 17; Par. Nos. [0016] to [0037] (Family: none) | 1-12 |
| X | JP 2003-168248 A (TDK Corp.), 13 June, 2003 (13.06.03), Claim 2; Par. No. [0008]; example 2; table 2 & WO 03/029382 A1 | 1-12 |
| X | JP 2003-22571 A (TDK Corp.), 24 January, 2003 (24.01.03), Par. Nos. [0050] to [0066] (Family: none) | 1-4,9-12 |
| Y | | 5-8 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 18 January, 2005 (18.01.05) | 01 February, 2005 (01.02.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

30

**EP 1 696 431 A1**

**INTERNATIONAL SEARCH REPORT**

| International application No. |
|---|
| PCT/JP2004/018172 |

C (Continuation).　DOCUMENTS CONSIDERED TO BE RELEVANT

| Category* | Citation of document, with indication, where appropriate, of the relevant passages | Relevant to claim No. |
|---|---|---|
| Y | JP 11-293159 A (Toray Industries, Inc.), 26 October, 1999 (26.10.99), Par. No. [0031] (Family: none) | 5-8 |
| A | JP 2004-185772 A (Ricoh Co., Ltd.), 02 July, 2004 (02.07.04), Par. No. [0019] (Family: none) | 1-12 |

Form PCT/ISA/210 (continuation of second sheet) (January 2004)

31